# FASCICULE DE BREVET EUROPEEN

(11) **EP 2 453 356 B1**
(45) Date de publication et mention de la délivrance du brevet: **15.07.2020**
(21) Numéro de dépôt: 11188437.5
(22) Date de dépôt: 09.11.2011
(51) Int. Cl.: G06F 9/44

(54) **Procédé, programme d'ordinateur et dispositif de sécurisation de code intermédiaire de programmation pour son exécution par une machine virtuelle**
Verfahren, Computerprogramm und Vorrichtung zur Sicherung des Programmierungs-Verbindungscodes für seine Ausführung durch eine virtuelle Maschine
Method, computer program and device for securing byte code to be run by a virtual machine

(30) Priorité: 10.11.2010 FR 1059276
(43) Date de publication de la demande: 16.05.2012
(73) Titulaire: IDEMIA France, 92400 Courbevoie (FR)
(72) Inventeur: Chamley, Olivier, 33850 Leognan (FR); Greneche, Hugo, 33610 Cestas (FR)
(74) Mandataire: Santarelli

(56) Documents cités:
- WO-A1-2005/008451
- AHMADOU AL KHARY SÉRÉ ET AL: "Automatic detection of fault attack and countermeasures", PROCEEDINGS OF THE 4TH WORKSHOP ON EMBEDDED SYSTEMS SECURITY, WESS '09, 1 janvier 2009 (2009-01-01), pages 1-6, XP055004452, New York, New York, USA DOI: 10.1145/1631716.1631723 ISBN: 978-1-60-558700-4
- Ahmadou Al Khary Séré et al: "Évaluation de mécanismes de détection d'attaques en fautes sur le tas statique d'une Java Card", Cryto 'Puce 2009, 5 juin 2009 (2009-06-05), pages 1-13, XP002656601, Porquerolles, France Extrait de l'Internet: URL:http://iml.univ-mrs.fr/ati/crypto_puce s/2009/slides/lanet.pdf [extrait le 2011-06-20]
- Ahmadou. Al Khary SÉRÉ: "Tissage de contremesures pour machines virtuelles embarquées", Thèse N° 29-2010, Université de Limoges, 23 septembre 2010 (2010-09-23), pages I-106, XP002656602, Limoges, France Extrait de l'Internet: URL:http://epublications.unilim.fr/theses/ 2010/sere-ahmadou-al-khary/sere-ahmadou-al -khary.pdf [extrait le 2011-06-20]

## Description

La présente invention concerne l'exécution d'applications logicielles codées en langage intermédiaire de programmation et plus particulièrement un procédé, un programme d'ordinateur et un dispositif de sécurisation de code intermédiaire de programmation pour son exécution dans une machine virtuelle.

En raison des différentes configurations matérielles pouvant être utilisées pour exécuter des applications logicielles, un langage de programmation particulier, appelé langage intermédiaire de programmation, est fréquemment utilisé. Il permet à des développeurs d'écrire des applications à l'aide de langages de programmation de haut niveau, indépendamment des architectures matérielles sur lesquelles doivent être exécutées ces applications. Les fichiers générés par les développeurs, conformes à ces langages de haut niveau, sont compilés (indépendamment de plateformes matérielles spécifiques) pour produire des fichiers applicatifs basés sur le langage intermédiaire de programmation. Une couche logicielle particulière, connue sous le nom de machine virtuelle, propre à une plateforme matérielle particulière, permet alors l'exécution d'applications à partir des fichiers applicatifs utilisant le langage intermédiaire de programmation.

A titre d'illustration, une application écrite dans le langage de programmation Java (Java est une marque) peut être compilée en pseudo-code Java (appelé *bytecode* en terminologie anglo-saxonne), c'est-à-dire dans un langage intermédiaire de programmation exécutable par une machine virtuelle Java sur des plateformes ayant des caractéristiques matérielles différentes. Les machines virtuelles Java sont spécifiques à chaque plateforme matérielle tandis que le code de l'application, en langage intermédiaire de programmation, est commun à ces différentes plateformes.

Alors que les machines virtuelles doivent être conformes à des spécifications données pour permettre l'exécution d'applications codées en langage intermédiaire de programmation, il existe néanmoins plusieurs types de machines virtuelles adaptées au type de plateformes matérielles sur lesquelles sont exécutées les applications. Typiquement, ces machines virtuelles se distinguent par leur jeu d'instructions plus ou moins complet.

Ainsi, par exemple, il existe des machines virtuelles Java particulières, connues sous le nom de Java Card, pour des plateformes matérielles telles que des cartes à microcircuit.

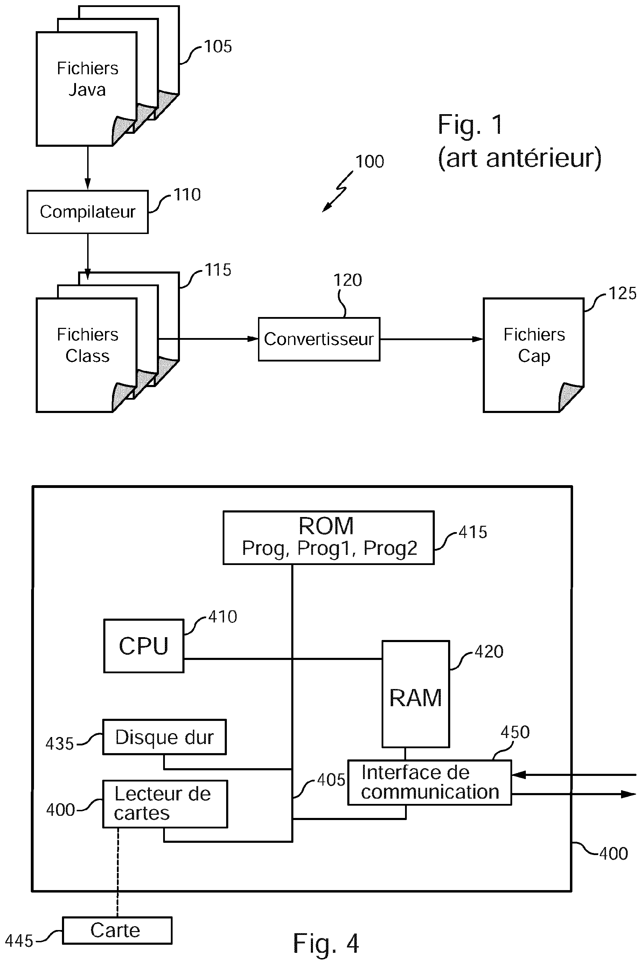

La figure 1 illustre schématiquement des étapes d'un procédé 100 pour la génération de fichiers pouvant être exécutés par une machine virtuelle pour cartes à microcircuit. L'application visée ici est une application de type Java.

Comme illustré, les fichiers sources 105 écrits en langage Java, c'est-à-dire dans un langage de haut niveau, sont compilés dans un compilateur 110 pour produire des fichiers 115 en langage intermédiaire de programmation, connus sous le nom de fichiers de type Class. Ces fichiers sont conformes à un standard de machines virtuelles. Les fichiers 115 sont alors convertis dans un convertisseur 120 pour les rendre conformes à une machine virtuelle particulière, ici Java Card. Les fichiers convertis, référencés 125, sont ici de type Cap. La conversion opérée par le convertisseur 120 a pour objet de simplifier les instructions du langage intermédiaire de programmation afin que les fichiers 115 puissent être exécutés par une machine virtuelle simplifiée. Une telle conversion vise notamment à supprimer certains types de variables, en particulier les variables de type booléen.

En d'autres termes, des fichiers d'instructions en code source au format Java sont ici compilés à l'aide d'un compilateur Java en fichiers de pseudo-instructions au format Class. Ces fichiers Class sont exécutables par de nombreuses machines virtuelles Java mais pas par la machine virtuelle Java Card qui ne contient pas tout le jeu d'instructions Java. Ces fichiers Class sont donc convertis à l'aide d'un convertisseur Java Card afin d'obtenir un fichier au format Cap qui est exécutable par une machine virtuelle Java Card.

Pour exécuter une application écrite en langage intermédiaire de programmation, converti ou non, une machine virtuelle dispose d'un jeu d'instructions propre et d'une pile d'exécution. Cependant, bien que l'exécution d'une application par une machine virtuelle présente un certain niveau de sécurité, les applications Java exécutées par des machines virtuelles, notamment par Java Card, sont susceptibles d'attaques, en particulier d'attaques par injection de fautes. Ce type d'attaque consiste à injecter une faute lors de l'exécution de l'application pour changer une valeur sur laquelle porte un calcul ou pour forcer l'exécution de certaines routines ou branches de l'application.

Pour parer ce type d'attaque, le code de certaines applications est redondant afin d'effectuer des contrôles au cours de son exécution. Bien qu'une telle solution permette d'améliorer la sécurité d'exécution des applications, elle requiert des ressources importantes. Pour pallier à cet inconvénient, la demande de brevet US 2009/0165149 propose un procédé d'exécution d'une application compilée en code intermédiaire de programmation sur un appareil numérique portatif muni d'une machine virtuelle d'exécution pour l'interprétation du code intermédiaire, comprenant une étape d'application d'un mode d'exécution sécurisé dans lequel l'interprétation du code intermédiaire par la machine virtuelle comprend les étapes suivantes :
- pour chaque donnée du code manipulée pour l'exécution d'une opération arithmétique et/ou logique définie par le code, générer une donnée de contrôle liée à ladite donnée du code par l'intermédiaire d'une fonction prédéterminée ; et,
- en parallèle de l'exécution de ladite opération, exécuter une opération de contrôle liée à ladite opération définie par le code par l'intermédiaire de ladite fonction prédéterminée et agissant sur la ou les données de contrôle.

Cependant, une telle solution nécessite une modification substantielle de la machine virtuelle utilisée.

Le document intitulée "Automatic detection of fault attack and countermeasures" de A. Al Kary Sere décrit différentes procédures pour éviter les attaques par injection de fautes dans des cartes à puces. Il propose d'agir par renommage d'instructions ou par adjonction de code de sécurité.

L'invention permet de résoudre au moins un des problèmes exposés précédemment.

L'invention a ainsi pour objet un procédé pour ordinateur de sécurisation de code intermédiaire de programmation pour son exécution par une machine virtuelle, ce procédé comprenant les étapes suivantes,
- réception d'une pluralité de pseudo-instructions dudit code intermédiaire de programmation ;
- conversion de ladite pluralité de pseudo-instructions, ladite conversion comprenant une étape d'ajout d'au moins une pseudo-instruction relative à une fonction de contrôle d'exécution d'au moins une pseudo-instruction de ladite pluralité de pseudo-instructions, indépendamment des pseudo-instructions du jeu initial; et,
- génération de pseudo-code, le pseudo-code généré comprenant ladite pluralité de pseudo-instructions convertie.

Le procédé selon l'invention permet ainsi de sécuriser l'exécution de pseudo-code sans qu'il soit nécessaire de modifier le code source correspondant. En outre, le procédé peut être mis en œuvre dans une étape de conversion de code intermédiaire de programmation de telle sorte que sa mise en œuvre soit transparente pour un utilisateur.

Selon un mode de réalisation particulier, ladite étape d'insertion comprend une étape d'insertion d'une pseudo-instruction représentative d'une commande pour ladite machine virtuelle, par exemple sous forme de *custom component* Java. Le pseudo-code généré peut ainsi être exécuté de façon sécurisée par une machine virtuelle adaptée tout en étant exécutable dans une machine virtuelle standard. Ladite commande pour ladite machine virtuelle a par exemple pour objet la vérification d'une pile d'exécution de ladite machine virtuelle afin de vérifier que ladite pile d'exécution de ladite machine virtuelle est vide. En vérifiant l'état de la pile d'exécution, il est possible de vérifier qu'une ou plusieurs fonctions ont bien été exécutées.

Toujours selon un mode de réalisation particulier, ladite étape de conversion comprend, pour chacune desdites pseudo-instructions reçues, les étapes suivantes,
- si ladite pseudo-instruction vise un traitement prédéterminé d'au moins une première valeur prédéterminée, suppression de ladite pseudo-instruction et insertion d'une pseudo-instruction visant ledit traitement prédéterminé pour au moins une seconde valeur prédéterminée, distincte de ladite au moins une première valeur prédéterminée ; et,
- si ladite pseudo-instruction vise la comparaison de ladite au moins une première valeur avec une autre valeur, suppression de ladite pseudo-instruction et insertion d'une pseudo-instruction visant une comparaison de ladite au moins une seconde valeur avec ladite autre valeur.

Le procédé selon l'invention permet ainsi de modifier des valeurs prédéterminées, notamment des valeurs booléennes pouvant être facilement identifiées, par des valeurs quelconques plus difficiles à appréhender.

Toujours selon un mode de réalisation particulier, ladite pseudo-instruction visant un traitement prédéterminé d'au moins une première valeur prédéterminée vise l'initialisation ou l'affectation d'une variable locale dont la valeur est, après exécution de l'étape d'initialisation ou d'affectation, égale à ladite première valeur.

Le procédé comprend en outre, de préférence, une étape de définition ou de calcul de ladite au moins une seconde valeur.

De façon avantageuse, le procédé comprend en outre une étape d'analyse d'au moins un ensemble de ladite pluralité de pseudo-instructions, lesdites étapes de suppression de ladite pseudo-instruction, visant un traitement prédéterminé d'au moins une première valeur prédéterminée, et d'insertion de ladite pseudo-instruction visant ledit traitement prédéterminé pour au moins une seconde valeur prédéterminée, étant effectuée en réponse à ladite étape d'analyse. Il est ainsi possible d'identifier des types de variables et de ne modifier des instructions de traitement de ces variables qu'en fonction de leur type. En particulier, il est possible de ne modifier que des fonctions traitant des variables de type booléen.

Selon un mode de réalisation particulier, le procédé comprend en outre une étape préalable de compilation de code, le résultat de ladite étape de compilation comprenant ladite pluralité de pseudo-instructions.

L'invention a également pour objet un programme d'ordinateur comprenant des instructions adaptées à la mise en œuvre de chacune des étapes du procédé décrit précédemment lorsque ledit programme est exécuté sur un ordinateur, un dispositif comprenant des moyens adaptés à la mise en œuvre de chacune des étapes du procédé décrit précédemment ainsi qu'une carte à microcircuit comprenant des pseudo-instructions obtenues par le procédé décrit précédemment.

Les avantages procurés par ce programme d'ordinateur, ce dispositif et cette carte à microcircuit sont similaires à ceux évoqués précédemment.

D'autres avantages, buts et caractéristiques de la présente invention ressortent de la description détaillée qui suit, faite à titre d'exemple non limitatif, au regard des dessins annexés dans lesquels :
- la figure 1 illustre schématiquement des étapes d'un procédé pour la génération de fichiers pouvant être exécutés par une machine virtuelle pour cartes à microcircuit ;
- la figure 2 illustre schématiquement des étapes d'un exemple d'algorithme pour convertir des pseudo-instructions issues d'une compilation de code source, conformément à l'invention ;
- la figure 3 illustre un exemple d'étape d'analyse de pseudo-instructions issues d'une compilation de code source pour déterminer une conversion à effectuer conformément à l'invention ; et,
- la figure 4 illustre un exemple d'architecture matérielle adaptée à mettre en œuvre certaines étapes de l'invention.

L'invention a généralement pour objet de modifier au moins une partie du code d'une application écrite en langage intermédiaire de programmation lors d'une conversion pour insérer au moins une pseudo-instruction permettant d'améliorer la sûreté d'exécution de cette application.

Une telle insertion peut être réalisée durant la conversion elle-même ou durant une étape précédant ou suivant celle-ci. Ainsi, conformément à l'invention, au moins une pseudo-instruction permettant d'améliorer la sûreté d'exécution d'une application peut être insérée dans un fichier de code intermédiaire de l'application (utilisant un langage intermédiaire de programmation), par exemple un fichier de type Class. Alternativement ou de façon complémentaire, au moins une pseudo-instruction permettant d'améliorer la sûreté d'exécution d'une application peut être insérée dans un fichier de code intermédiaire converti de l'application, par exemple un fichier de type Cap.

Il est tout d'abord observé que le type booléen pouvant être attribué à des données ou variables est, dans un fichier source Java, particulier car l'information sur ce type est « perdu » durant la phase de compilation. En effet, une information de type booléen est, dans un fichier Java, égale à *vrai* ou *faux.* Cependant, après la phase de compilation, ces valeurs sont remplacées par les valeurs entières zéro ou un.

Ainsi, par exemple, l'expression Java source « *boolean myBoolean* = *faux* » est remplacée, durant sa compilation, par l'expression « *iconst_0* » selon laquelle la valeur zéro est placée sur la pile d'exécution de la machine virtuelle et l'expression suivante « *istore_1* » pour mémoriser la dernière valeur de la pile d'exécution de la machine virtuelle dans une première variable locale. Une variable locale correspond ici à un champ d'un registre d'une mémoire non volatile. De même, l'expression Java source « *boolean myResult* = *vrai »* est remplacée, durant sa compilation, par l'expression *« iconst_1* » selon laquelle la valeur un est placée sur la pile d'exécution de la machine virtuelle et l'expression suivante « *istore_2* » pour mémoriser la dernière valeur de la pile d'exécution de la machine virtuelle dans une autre variable locale. Ainsi, le caractère booléen des variables *myBoolean* et *myResult* a disparu au profit des valeurs entières zéro et un.

Le type booléen dans un fichier source Java est typiquement utilisé pour effectuer des tests conditionnels qui sont généralement réalisés à l'aide de la fonction *if*. Durant la phase de compilation, ces fonctions sont remplacées par des pseudo-instructions, ou *bytecodes,* spécifiques qui comparent la valeur présente sur la pile d'exécution à la valeur zéro. Ainsi, par exemple, la pseudo-instruction *ifeq* compare l'élément présent sur la pile d'exécution avec la valeur zéro et effectue un saut vers le code résultant de la comparaison.

Le tableau 1 donné en annexe illustre un exemple simplifié de compilation d'une fonction dont le code source est écrit en langage Java. La première colonne présente des instructions Java de la fonction telles qu'elles peuvent être écrites dans un fichier source Java tandis que la deuxième colonne présente les pseudo-instructions correspondantes, c'est-à-dire le contenu d'un fichier correspondant de type Class, la troisième colonne représentant un index sur les pseudo-instructions.

Comme illustré, une première instruction Java a pour objet d'initialiser la variable *myBoolean* à la valeur *faux.* Le résultat de la compilation de cette instruction comprend les pseudo-instructions « *iconst_0* » et *« istore_1* » pour mémoriser la valeur zéro, après qu'elle ait été placée sur la pile d'exécution, dans une première variable locale. Cette première instruction est suivie d'une seconde pour initialiser la variable *myResult* à la valeur *vrai.* A nouveau, le résultat de la compilation de cette instruction comprend les pseudo-instructions « *iconst_1* » et « *istore_2* » pour mémoriser la valeur un, après qu'elle ait été placée sur la pile d'exécution, dans une seconde variable locale.

Ces instructions Java de déclaration sont ici suivies par une instruction Java de test consistant à tester la variable *myBoolean.* Le résultat de la compilation de cette dernière conduit aux pseudo-instructions « *iload_1* » et *« ifeq 9* » qui ont pour objet de placer la valeur de la première variable locale sur la pile d'exécution et, si la valeur de la pile d'exécution est égale à un, d'effectuer un saut sur la pseudo-instruction ayant l'index 9, c'est-à-dire sur la première pseudo-instruction à exécuter si le résultat du test est *faux.*

L'instruction Java suivante, s'il n'y a pas de saut, consiste à assigner la valeur *vrai* à la variable *myResult.* Le résultat de la compilation de cette expression conduit aux pseudo-instructions « *iconst* 1 » et *« istore_2 »* pour mémoriser la valeur un, après qu'elle ait été placée sur la pile d'exécution, dans la seconde variable locale.

Comme il n'y a pas d'autres instructions à exécuter lorsque le résultat du test précédent est *vrai,* une étape suivante consiste en un saut sur la pseudo-instruction ayant l'index 11, c'est-à-dire sur la première instruction suivant les pseudo-instructions à exécuter lorsque le résultat du test précédent est *faux.*

Lorsque le résultat du test précédent est *faux,* l'instruction Java suivante, s'il n'y a pas de saut, consiste à assigner la valeur *faux* à la variable *myResult.* Le résultat de la compilation de cette expression conduit aux pseudo-instructions « *iconst_0* » et « *istore_2* » pour mémoriser la valeur zéro, après qu'elle ait été placée sur la pile d'exécution, dans la seconde variable locale.

Ainsi, comme illustré dans cet exemple, le test d'une variable de type booléen avec une valeur *vrai* est compilé en un test de la valeur d'une variable avec zéro. Le test de comparaison avec une valeur *vrai* ou *faux* a disparu lors de la compilation des instructions Java.

Par conséquent, des techniques d'attaques par injection de fautes, qui permettent de modifier les valeurs sur la pile d'exécution de la machine virtuelle Java, peuvent être utilisées pour modifier les résultats de tests et ainsi conduire à l'exécution de l'ensemble du code Java ou à certaines parties qui n'auraient pas du être exécutées.

Il est observé ici que si, dans l'exemple précédent, un test est effectué sur une valeur booléenne, les risques d'attaques par fautes sont équivalents lorsque des tests portant sur des entiers ayant les valeurs zéro et un.

Pour sécuriser l'exécution de tests dans une application Java exécutée par une machine virtuelle nécessitant une conversion du code en langage intermédiaire de programmation (pseudo-code), l'invention comprend, selon un premier mode de réalisation, des étapes de modification des valeurs utilisées pour effectuer des tests afin qu'elles ne puissent être retrouvées et donc modifiées facilement. En d'autres termes, l'invention vise ici à sécuriser les variables de type booléen en affectant à des valeurs *vrai* et *faux,* zéro et un ou toutes autres valeurs facilement identifiables d'un fichier source Java, des valeurs internes particulières, notamment des valeurs différentes de zéro et un.

Cette modification est avantageusement réalisée durant une étape de conversion des pseudo-instructions afin d'enrichir le jeu d'instructions d'une machine virtuelle, par exemple d'une machine virtuelle Java Card embarquée, la mise en œuvre de l'invention ne nécessitant pas de modification du code source Java. Les machines virtuelles utilisées pour les exécuter sont modifiées pour offrir de nouvelles fonctionnalités comme décrit ci-après.

Le tableau 2 donné en annexe illustre un exemple simplifié de conversion du pseudo-code compilé illustré dans le tableau 1. La première colonne présente des pseudo-instructions Java telles qu'elles peuvent figurer dans un fichier de type Class Java tandis que la deuxième colonne présente les pseudo-instructions correspondantes après modification, la troisième colonne représentant un index sur les pseudo-instructions.

De façon générale, il est admis ici que la conversion vise à convertir des pseudo-instructions relatives à des données de type entier en pseudo-instructions relatives à des données de type short. Ainsi, par exemple, la pseudo-instruction *istore_1* qui a pour objet de stocker la valeur placée sur la pile d'exécution dans une première variable locale sous forme d'entier est remplacée par la pseudo-instruction *sstore_1* qui a pour objet de stocker la valeur de la pile d'exécution dans une première variable locale sous forme de short. De même, la pseudo-instruction *iload_1* qui a pour objet de placer la valeur stockée dans la première variable locale sous forme d'un entier sur la pile d'exécution est remplacée par la pseudo-instruction *sload_1* qui a pour objet de placer la valeur stockée dans la première variable locale sous forme d'un short sur la pile d'exécution.

Naturellement, d'autres conversions peuvent être utilisées.

Comme illustré sur le tableau 2, la pseudo-instruction *iconst_0* est supprimée et la pseudo-instruction *sconst_false* est insérée à sa place. La pseudo-instruction *sconst_false* a pour objet de placer une première valeur prédéterminée sur la pile d'exécution. Cette valeur représente l'état *faux,* il s'agit ici d'un nombre de type short. Elle peut être constante et propre à l'application ou peut être une valeur aléatoire déterminée, par exemple, lors du lancement de l'application. Alternativement, cette valeur peut être une constante propre à une machine virtuelle ou une valeur aléatoire déterminée, par exemple, lors du lancement de la machine virtuelle. De même, la pseudo-instruction *iconst_1* est supprimée et la pseudo-instruction *sconst_true* est insérée à sa place. La pseudo-instruction *sconst_true* a pour objet de placer une seconde valeur prédéterminée sur la pile d'exécution. Cette valeur représente l'état *vrai.* A nouveau, il s'agit ici d'un nombre de type short qui peut être une constante propre à l'application, une valeur aléatoire déterminée, par exemple, lors du lancement de l'application ou une valeur liée à une machine virtuelle.

Par ailleurs, la pseudo-instruction *ifeq* est supprimée et la pseudo-instruction *ifBeq* est insérée à sa place. L'objet de la pseudo-instruction *ifBeq* est de comparer la valeur présente sur la pile d'exécution avec la seconde valeur prédéterminée représentant l'état *vrai.* Dans l'exemple présenté dans le tableau 2, si la valeur sur la pile d'exécution n'est pas égale à la seconde valeur prédéterminée (valeur prédéterminée représentant l'état *vrai),* le test n'est pas vérifié et la pseudo-instruction suivante à être exécutée est la pseudo-instruction ayant l'index 9. Dans le cas contraire, la pseudo-instruction suivant la pseudo-instruction de comparaison est exécutée.

Alternativement, la valeur placée sur la pile d'exécution peut être comparée avec les deux valeurs des états booléens. Ainsi, la pseudo-instruction *ifBeq* compare la valeur présente sur la pile d'exécution avec la seconde valeur prédéterminée représentant l'état *vrai.* Si le test est vérifié, la pseudo-instruction suivante à être exécutée est la pseudo-instruction dont l'index suit celui de la pseudo-instruction *ifBeq* (ici 6). Si le test n'est pas vérifié, la pseudo-instruction *ifBeq* compare la valeur présente sur la pile d'exécution avec la première valeur prédéterminée représentant l'état *faux.* Si le test est vérifié, la pseudo-instruction suivante à être exécutée est la pseudo-instruction dont l'index est indiqué (ici 9). Si le test n'est pas vérifié, une routine d'exception est exécutée. Il peut notamment s'agir d'une contre-mesure consistant, par exemple, à rendre le microcontrôleur inopérant (par exemple de façon connue, en écrivant une valeur en mémoire non volatile, vérifiée par le contrôleur lors des exécution ultérieures).

Les pseudo-instructions *sconst_false* et *sconst_true* correspondent des valeurs internes différentes de zéro et un. Ainsi, il est difficile de modifier ces valeurs pour exécuter des comparaisons correctement. En d'autres termes, il est difficile, pour des attaques par injection de fautes, de modifier la valeur d'une variable sur la pile puisque ces valeurs ne sont plus zéro ou un mais des valeurs internes.

Le tableau 3 présenté en annexe illustre un exemple de table de modification pour convertir du pseudo-code conformément à l'exemple donné en référence au tableau 2. La première colonne représente ici des pseudo-instructions résultant d'une étape de compilation tandis que la seconde colonne comprend les pseudo-instructions correspondantes après modification.

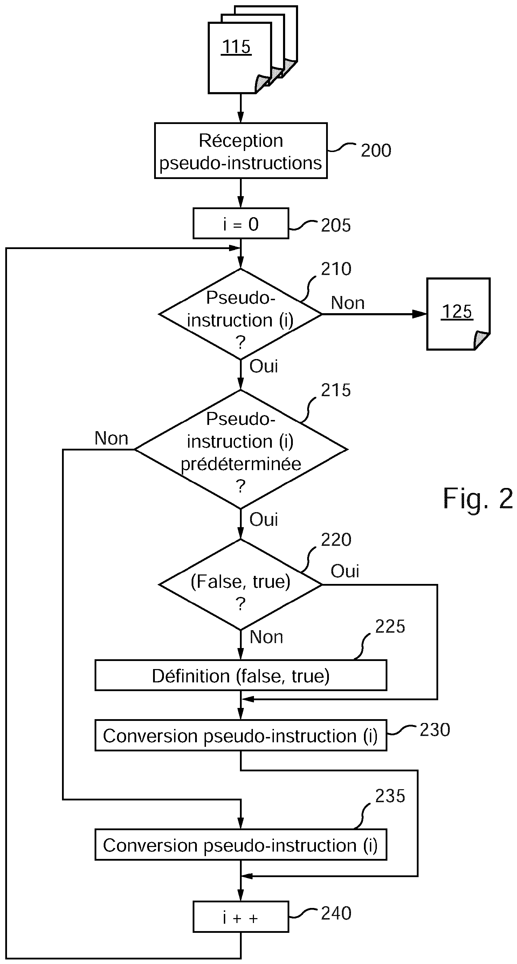

La figure 2 illustre schématiquement des étapes d'un exemple d'algorithme pour convertir des pseudo-instructions issues d'une compilation de code source, conformément à l'invention.

Une première étape (étape 200) consiste ici à recevoir les pseudo-instructions à convertir. Elles proviennent, par exemple, de fichiers 115 obtenus par compilation de fichiers sources Java 105.

Dans une étape suivante, un index *i* de pseudo-instruction est initialisé à zéro (étape 205). Un test est alors effectué pour déterminer s'il existe une pseudo-instruction correspondant à l'index *i* (étape 210).

S'il existe une pseudo-instruction correspondant à l'index *i*, un second test est effectué pour déterminer si la pseudo-instruction correspondant à l'index *i* est une instruction prédéterminée susceptible de faire intervenir une valeur booléenne (étape 215). De telles pseudo-instructions sont notamment les suivantes,
- *iconst_0* et *sconst_0* qui ont pour objet de mettre la valeur zéro (codée sous forme d'entier et de short, respectivement) sur la pile d'exécution ;
- *iconst_1* et *sconst_1* qui ont pour objet de mettre la valeur un (codée sous forme d'entier et de short, respectivement) sur la pile d'exécution ; et,
- *ifeq* qui a pour objet de vérifier si la valeur présente sur la pile d'exécution correspond à un état vrai ou non, c'est-à-dire si cette valeur est égale à un ou non.

Dans l'affirmative, un test est effectué pour déterminer si les états booléens ont été définis (étape 220).

Si les états booléens n'ont pas été définis, ils le sont (étape 225). Une telle définition peut notamment consister en la définition de constante, c'est-à-dire en l'assignation d'une valeur prédéterminée à une constante ayant un nom prédéterminé (par exemple, *false* = *35* et *true* = *65*). Elle peut également consister à calculer des valeurs, notamment des valeurs aléatoires à l'aide de fonctions standard (par exemple, *false* = *random(127)* et *true* = *random(127)* où *random(n)* est une fonction qui retourne un nombre aléatoire compris entre zéro et *n*)*.*

Comme indiqué précédemment, les états booléens peuvent être définis par les machines virtuelles. Dans ce cas, les étapes 220 et 225 ne sont pas nécessaires.

Après que les états booléens aient été définis, lorsqu'ils ont été préalablement définis ou lorsqu'ils sont déterminés par les machines virtuelles, la pseudo-instruction correspondant à l'index *i* est supprimée et une nouvelle pseudo-instruction est insérée à sa place (étape 230). Cette étape consiste à identifier, par exemple dans une table de conversion, une pseudo-instruction visant un traitement similaire au traitement effectué par la pseudo-instruction correspondant à l'index *i* et effectuée sur un état booléen prédéterminé, c'est-à-dire sur une valeur différente de zéro et un.

A titre d'illustration, les pseudo-instructions *iconst_0* et *sconst_0* peuvent être supprimées et la pseudo-instruction *sconst_false* peut être insérée à leurs places. Comme indiqué précédemment, la pseudo-instruction *sconst_false* a pour objet de mettre la valeur de la variable *false* (codée ici sous forme de short) sur la pile d'exécution. De façon similaire, les pseudo-instructions *iconst_1* et *sconst_1* peuvent être supprimées et la pseudo-instruction *sconst_true* peut être insérée à leurs places. La pseudo-instruction *sconst_true* a pour objet de mettre la valeur de la variable *true* (codée ici sous forme de short) sur la pile d'exécution. De même, la pseudo-instruction *ifeq* peut être supprimée et la pseudo-instruction *ifBeq* peut être insérée à sa place, la pseudo-instruction *ifBeq* ayant pour objet de vérifier si la valeur présente sur la pile d'exécution correspond à un état vrai ou non, c'est-à-dire si cette valeur est égale à la valeur de la variable *true* ou non.

Si la pseudo-instruction correspondant à l'index *i* n'est pas une instruction prédéterminée faisant intervenir une valeur booléenne, la pseudo-instruction correspondant à l'index *i* est convertie de façon standard (étape 235), par exemple à l'aide d'une table de conversion.

Après que la pseudo-instruction correspondant à l'index *i* ait été convertie (étape 230 ou 235), l'index i est incrémenté de un (étape 240) et l'algorithme retourne à l'étape 210 où un test est effectué pour déterminer s'il existe une pseudo-instruction à convertir correspondant à l'index *i.*

S'il n'existe pas de pseudo-instruction correspondant à l'index *i* (étape 210), toutes les pseudo-instructions ont été converties. Le fichier résultant, ici le fichier 125 de type Cap, peut être utilisé dans un dispositif, notamment une carte à microcircuit, comprenant une machine virtuelle appropriée, c'est-à-dire ici, une machine virtuelle Java Card.

Comme indiqué précédemment, le jeu d'instructions des machines virtuelles utilisées pour l'exécution d'applications mettant en œuvre l'invention est modifié. Une fonction de type comparaison d'états booléens, par exemple la fonction *ifBeq* décrite précédemment, est ajoutée. Une telle fonction permet de comparer la valeur présente sur la pile d'exécution avec une valeur prédéterminée correspondant à un état booléen *vrai* ou *faux.* Les valeurs d'état booléen peuvent être déterminées par une application exécutée ou par la machine virtuelle. De façon avantageuse, un état est assigné par la machine virtuelle, lors de son lancement, à chaque état booléen pour éviter des erreurs si ces états ne sont pas définis pas les applications. Comme décrit précédemment, la valeur des états booléens peut être une constante prédéterminée ou une valeur aléatoire déterminée par la machine virtuelle lors de son lancement ou lorsqu'une application est exécutée. Ces états sont définis selon des noms prédéterminés (utilisés par les applications), par exemple *true* et *false.* Si la valeur des états booléens est une constante prédéterminée, elle est déclarée de façon standard sinon elle est calculée à l'aide d'une fonction standard.

Il est également observé que, selon le mode de réalisation décrit précédemment, les pseudo-instructions ayant pour objet de mettre les valeurs zéro et un sur la pile d'exécution sont remplacées par des pseudo-instructions ayant pour objet de mettre des valeurs prédéterminés (correspondant aux états booléens) sur la pile d'exécution. Une telle réaffectation peut poser des problèmes lors de l'exécution d'applications car une telle réaffectation vise indifféremment des valeurs de type booléen et des valeurs d'autres types, par exemple de type entier. Ainsi, par exemple, un compteur peut être initialisé à la valeur zéro puis incrémenté au fur et à mesure que des calculs sont effectués afin d'arrêter ces derniers selon la valeur du compteur. La variable associée à un tel compteur ne doit donc pas être considérée comme de type booléen.

Plusieurs solutions peuvent être mises en œuvre pour éviter un tel problème.

Selon une première solution, la machine virtuelle exécutant les pseudo-instructions est modifiée pour détecter des réaffectations non justifiées. A ces fins, des tests sont effectués (par la machine virtuelle exécutant l'application) pour détecter les opérations arithmétiques devant être effectuées par la machine virtuelle conformément aux pseudo-instructions exécutées. Si un opérande de ces opérations arithmétiques est une variable préalablement initialisée à une valeur prédéterminée correspondant à un état booléen, un test est effectué pour comparer la valeur de cet opérande aux valeurs des états booléens. Si la valeur de cet opérande est égale à la valeur d'un état booléen, elle est réinitialisée pour prendre la valeur zéro ou un correspondant à la valeur de l'état booléen (zéro si la valeur de l'état booléen est 35 et un si la valeur de l'état booléen est 65 selon l'exemple précédent). Si, au contraire, la valeur de cet opérande n'est pas égale à la valeur d'un état booléen, elle n'est pas modifiée. Ainsi, toutes les variables devant être initialisées à zéro ou un (conformément aux pseudo-instructions issues de la compilation de code source) sont, conformément aux pseudo-instructions converties, initialisées aux valeurs prédéterminées correspondant aux états booléens, leur valeur étant ensuite réinitialisées à zéro ou un par la machine virtuelle s'il s'agit de variables utilisées pour des opérations arithmétiques.

Selon une seconde solution, une analyse des pseudo-instructions issues de la compilation de code source est effectuée lors de leur conversion. Ainsi, pour chaque variable devant être initialisée à zéro ou un, une analyse des instructions est effectuée pour déterminer si la variable est, par la suite, utilisée dans au moins une opération arithmétique, par exemple une incrémentation, ou dans une opération logique, par exemple une comparaison avec une valeur déterminée égale à zéro ou un. Si la variable est utilisée dans une opération arithmétique, les pseudo-instructions liées à son initialisation ne sont pas modifiées. Dans le cas contraire, si la variable est utilisée dans une opération arithmétique, les pseudo-instructions liées à son initialisation sont converties pour initialiser la variable à une valeur prédéterminée correspondant à un état booléen.

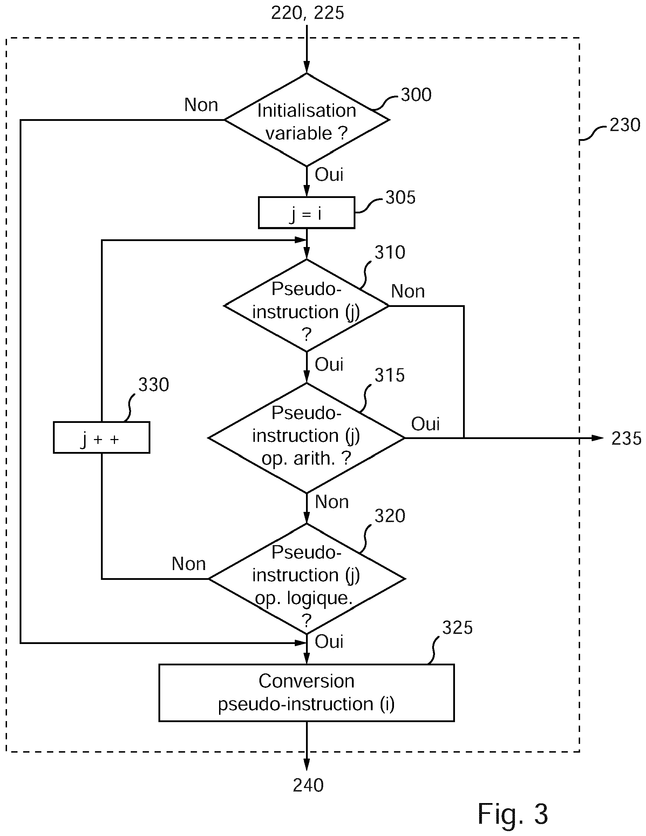

La figure 3 illustre un exemple d'une telle étape d'analyse des pseudo-instructions issues d'une compilation de code source pour déterminer une conversion à effectuer conformément à l'invention.

Les étapes décrites en référence à la figure 3 sont, par exemple, mises en œuvre au cours de l'étape 230 décrite en référence à la figure 2.

Une première étape a ici pour objet de déterminer si la pseudo-instruction correspondant à l'index *i* est une instruction visant une initialisation ou une affectation de variable ou non (étape 300), c'est-à-dire, par exemple, une pseudo-instruction *iconst_x* suivi d'une pseudo-instruction *istore_y* pour mémoriser la valeur *x* dans la variable *y.* Cette étape est exécutée après l'étape 220 ou l'étape 225 décrites en référence à la figure 2.

Dans l'affirmative, une variable *j,* représentant un index sur des pseudo-instructions à convertir, est initialisée à la valeur de la variable *i* (étape 305).

Un test est alors effectué pour déterminer s'il existe une pseudo-instruction correspondant à l'index *j* (étape 310). S'il existe une pseudo-instruction correspondant à l'index *j,* un test est effectué pour déterminer si la pseudo-instruction correspondant à l'index *j* vise une opération arithmétique et si un opérande de cette opération consiste en la variable initialisée ou affectée par la pseudo-instruction correspondant à l'index *i* (étape 315).

Dans la négative, un test est effectué pour déterminer si la pseudo-instruction correspondant à l'index *j* vise une opération logique et si un opérande de cette opération consiste en la variable initialisée ou affectée par la pseudo-instruction correspondant à l'index *i* (étape 320).

Dans l'affirmative, la pseudo-instruction correspondant à l'index *j* est convertie conformément à l'invention comme indiqué précédemment (étape 325). Cette étape est suivie de l'étape 240 décrite en référence à la figure 2.

Si la pseudo-instruction correspondant à l'index *j* ne vise pas une opération logique (étape 320), l'index *j* est incrémenté de un (étape 330) et l'étape 310 est à nouveau exécutée pour traiter la pseudo-instruction suivante si elle existe.

Si la pseudo-instruction correspondant à l'index *j* vise une opération arithmétique et si un opérande de cette opération consiste en la variable initialisée ou affectée par la pseudo-instruction correspondant à l'index *i* (étape 315) ou s'il n'existe pas de pseudo-instruction correspondant à l'index *j,* la pseudo-instruction correspondant à l'index i est convertie de façon standard (étape 235 décrite en référence à la figure 2).

Ainsi, les étapes décrites en référence à la figure 3 permettent de distinguer les variables utilisées pour des opérations logiques des variables utilisées pour des opérations arithmétiques et d'adapter en conséquence la conversion des pseudo-instructions pour améliorer la sécurité d'exécution d'applications sans perturber leur fonctionnement.

De façon similaire, l'invention telle que décrite précédemment peut être mise en œuvre pour sécuriser l'exécution d'une application selon le procédé décrit dans la demande de brevet WO 2005/008451. Conformément à l'enseignement de cette demande de brevet, une valeur prédéterminée est placée sur la pile d'exécution. Puis, après l'exécution d'un ensemble d'instructions dont l'exécution doit être contrôlée, la valeur présente sur la pile d'exécution est comparée à la valeur prédéterminée préalablement placée sur celle-ci. Cette comparaison permet de détecter une anomalie d'exécution de cet ensemble d'instructions.

Les valeurs prédéterminées utilisées pour contrôler l'exécution d'ensembles d'instructions sont avantageusement modifiées conformément à l'invention.

Selon un autre mode de réalisation, pouvant être mis en œuvre indépendamment ou en combinaison avec celui décrit précédemment, le jeu de pseudo-instructions du code en langage intermédiaire de programmation est modifié lors de sa conversion de façon à incorporer une ou plusieurs pseudo-instructions permettant de contrôler l'exécution de fonctions, indépendamment des pseudo-instructions du jeu initial.

Il est rappelé ici que, conformément à la spécification Java Card, des pseudo-instructions peuvent être ajoutées à celles de fichiers de type Cap, à destination de la machine virtuelle interprétant les pseudo-instructions de ces fichiers. Ces pseudo-instructions sont traitées par la machine virtuelle en tant que commandes et non en tant qu'instructions de l'application exécutée. Elles sont identifiées à l'aide de balises (ou *tag* en terminologie anglo-saxonne) prédéterminées et forment des entités appelées *custom components.*

Des champs de données (appelés *info item* en terminologie anglo-saxonne) de *custom components* peuvent ainsi être utilisés pour transmettre à une machine virtuelle des pseudo-instructions visant à contrôler l'exécution de fonctions ou d'ensembles de fonctions.

Ainsi, conformément à ce second mode de réalisation, des pseudo-instructions sont ajoutées aux pseudo-instructions des fichiers de type Cap pour contrôler l'exécution de fonctions, par exemple de fonctions définies par un système de parenthèses comme décrit dans la demande de brevet WO 2005/008451. Ces pseudo-instructions peuvent notamment avoir pour objet de vérifier que la pile d'exécution se trouve, après l'exécution de fonctions, dans un état attendu.

A titre d'illustration, de telles pseudo-instructions peuvent être introduites dans un fichier de type Cap, sous forme de données dans des champs de données de *custom components,* afin de contrôler l'exécution de toutes les fonctions définies par un système de parenthèses dans le fichier considéré. Elles peuvent ordonner à la machine virtuelle de vérifier que la pile d'exécution est vide après l'exécution de chaque fonction. A ces fins, la machine virtuelle peut vérifier que l'adresse du haut de la pile d'exécution est égale à l'adresse du bas de la pile d'exécution.

Il est observé ici qu'un tel mode de réalisation permet l'exécution de pseudo-instructions de fichiers de type Cap par des machines virtuelles standard, les pseudo-instructions insérées sous forme de données dans des champs de données de *custom component* étant alors ignorées.

La figure 4 illustre un exemple d'architecture matérielle d'un dispositif 400 adapté à mettre en œuvre certaines étapes de l'invention, en particulier les étapes décrites en référence aux figures 2 et 3. Le dispositif 400 est, par exemple, un calculateur ou un ordinateur. Il comporte ici un bus de communication 405 auquel sont reliés :
- une ou plusieurs unités centrales de traitement ou microprocesseurs 410 (CPU) ;
- une mémoire morte 415 (ROM, acronyme de *Read Only Memory* en terminologie anglo-saxonne) pouvant comporter des programmes (prog, prog1 et prog2) nécessaires à la mise en œuvre de l'invention ;
- une mémoire vive ou mémoire cache 420 (RAM, acronyme de *Random Access Memory* en terminologie anglo-saxonne) comportant des registres adaptés à enregistrer des variables et paramètres créés et modifiés au cours de l'exécution des programmes précités ; et
- une interface de communication 450 adaptée à transmettre et à recevoir des données.

Le dispositif 400 dispose également, de préférence, d'un disque dur 435 pouvant comporter les programmes précités ainsi que des informations traitées ou à traiter selon l'invention et d'un lecteur de cartes mémoires 440 adapté à recevoir une carte mémoire 445 et à y lire ou à y écrire des données traitées ou à traiter selon l'invention.

Le bus de communication permet la communication et l'interopérabilité entre les différents éléments inclus dans le dispositif 400 ou reliés à lui. La représentation du bus n'est pas limitative et, notamment, l'unité centrale est susceptible de communiquer des instructions à tout élément du dispositif 400 directement ou par l'intermédiaire d'un autre élément du dispositif 400.

Le code exécutable de chaque programme permettant au dispositif programmable de mettre en œuvre les processus selon l'invention, peut être stocké, par exemple, dans le disque dur 435 ou en mémoire morte 415.

Selon une variante, la carte mémoire 445 peut contenir des informations, notamment des informations à traiter selon l'invention, ainsi que le code exécutable des programmes précités qui, une fois lu par le dispositif 400, est stocké dans le disque dur 435.

Selon une autre variante, le code exécutable des programmes et les informations à traiter selon l'invention pourront être reçus, au moins partiellement, par l'intermédiaire de l'interface 450, pour être stocké de façon identique à celle décrite précédemment.

De manière plus générale, le ou les programmes ainsi que les informations à traiter selon l'invention pourront être chargés dans un des moyens de stockage du dispositif 400 avant d'être exécutés.

L'unité centrale 410 va commander et diriger l'exécution des instructions ou portions de code logiciel du ou des programmes selon l'invention, instructions qui sont stockées dans le disque dur 435 ou dans la mémoire morte 415 ou bien dans les autres éléments de stockage précités. Lors de la mise sous tension, le ou les programmes qui sont stockés dans une mémoire non volatile, par exemple le disque dur 435 ou la mémoire morte 415, sont transférés dans la mémoire vive 420 qui contient alors le code exécutable du ou des programmes selon l'invention, ainsi que des registres pour mémoriser les variables et paramètres nécessaires à la mise en œuvre de l'invention.

Naturellement, pour satisfaire des besoins spécifiques, une personne compétente dans le domaine de l'invention pourra appliquer des modifications dans la description précédente. En particulier, alors que l'invention est, dans un souci de clarté et d'illustration, particulièrement décrite en référence au langage de programmation Java, elle peut être mise en œuvre avec d'autres types de langage de programmation.

### ANNEXE

**Tableau 1**

| Fichier source Java | Fichier Class Java | Index | Remarques |
|---|---|---|---|
| *public void deselect(){* | | | |
| *boolean myBoolean*=*false* | *iconst_0* | 0 | Mettre la valeur égale à zéro sur la pile d'exécution |
| | *istore_1* | 1 | Stocker la valeur de la pile d'exécution dans une première variable locale |
| *boolean myResult=true* | *iconst_1* | 2 | Mettre la valeur égale à un sur la pile d'exécution |
| | *istore_2* | 3 | Stocker la valeur de la pile d'exécution dans une seconde variable locale |
| *if(myBoolean==true){* | *iload_1* | 4 | Mettre la valeur de la première variable locale sur la pile d'exécution |
| | *ifeq 9* | 5 | Si la valeur de la pile d'exécution n'est pas égale à un, aller en 9 |
| *myResult=true* | *iconst_1* | 6 | Mettre la valeur égale à un sur la pile d'exécution |
| | *istore_2* | 7 | Stocker la valeur de la pile d'exécution dans la seconde variable locale |
| *} else {* | *goto 11* | 8 | Aller en 11 |
| *myResult=true} else{* | *iconst_0* | 9 | Mettre la valeur égale à zéro sur la pile d'exécution |
| *myResult=false}* | *istore_2* | 10 | Stocker la valeur de la pile d'exécution dans une seconde variable locale |
| *}* | *return* | 11 | |

**Tableau 2**

| Fichier Class Java | Fichier Cap Java | Index | Remarques |
|---|---|---|---|
| *iconst_0* | *sconst_false* | 0 | Mettre une première valeur prédéterminée (égale, par exemple, à 35) sur la pile d'exécution |
| *istore_1* | *sstore_1* | 1 | Stocker la valeur de la pile d'exécution dans une première variable locale |
| *iconst_1* | *sconst_true* | 2 | Mettre une seconde valeur prédéterminée (égale, par exemple, à 65) sur la pile d'exécution |
| *istore_2* | *sstore_2* | 3 | Stocker la valeur de la pile d'exécution dans une seconde variable locale |
| *iload_1* | *sload_1* | 4 | Mettre la valeur de la première variable locale sur la pile d'exécution |
| *ifeq 9* | *ifBeg 9* | 5 | Si la valeur de la pile d'exécution n'est pas égale à la seconde valeur prédéterminée, aller en 9 |
| *iconst_1* | *sconst_true* | 6 | Mettre la seconde valeur prédéterminée sur la pile d'exécution |
| *istore_2* | *sstore_2* | 7 | Stocker la valeur de la pile d'exécution dans la seconde variable locale |
| *goto 11* | *goto 11* | 8 | Aller en 11 |
| *iconst_0* | *sconst_false* | 9 | Mettre la première valeur prédéterminée sur la pile d'exécution |
| *istore_2* | *sstore_2* | 10 | Stocker la valeur de la pile d'exécution dans une seconde variable locale |
| *return* | *return* | 11 | |

**Tableau 3**

| Pseudo-instructions compilées | Pseudo-instructions converties |
|---|---|
| *iconst_0* | *sconst_false* |
| *iconst_1* | *sconst_true* |
| *istore_1* | *sstore_1* |
| *istore_2* | *sstore_2* |
| *iload_1* | *sload_1* |
| *iload_2* | *sload_2* |
| *ifeq* | *ifBeq* |
| *goto* | *goto* |
| *return* | *return* |

## Revendications

1. Procédé pour ordinateur de sécurisation de code intermédiaire de programmation pour son exécution par une machine virtuelle, ce procédé étant **caractérisé en ce qu'**il comprend les étapes suivantes,
- réception (200) d'une pluralité de pseudo-instructions dudit code intermédiaire de programmation ;
- conversion (230, 235) de ladite pluralité de pseudo-instructions, ladite conversion comprenant une étape d'ajout d'au moins une pseudo-instruction relative à une fonction de contrôle d'exécution d'au moins une pseudo-instruction de ladite pluralité de pseudo-instructions, indépendamment des pseudo-instructions du jeu initial ; et,
- génération de pseudo-code, le pseudo-code généré comprenant ladite pluralité de pseudo-instructions convertie.

2. Procédé selon la revendication 1 selon lequel ladite étape d'ajout comprend une étape d'ajout d'une pseudo-instruction représentative d'une commande pour ladite machine virtuelle.

3. Procédé selon la revendication 2 selon lequel ladite commande pour ladite machine virtuelle a pour objet la vérification d'une pile d'exécution de ladite machine virtuelle afin de vérifier que ladite pile d'exécution de ladite machine virtuelle est vide.

4. Procédé selon la revendication 1 selon lequel ladite étape de conversion comprend, pour chacune desdites pseudo-instructions reçues, les étapes suivantes,
- si ladite pseudo-instruction vise un traitement prédéterminé d'au moins une première valeur prédéterminée, suppression de ladite pseudo-instruction et ajout (230) d'une pseudo-instruction visant ledit traitement prédéterminé pour au moins une seconde valeur prédéterminée, distincte de ladite au moins une première valeur prédéterminée ; et,
- si ladite pseudo-instruction vise la comparaison de ladite au moins une première valeur avec une autre valeur, suppression de ladite pseudo-instruction et ajout (230) d'une pseudo-instruction visant une comparaison de ladite au moins une seconde valeur avec ladite autre valeur.

5. Procédé selon la revendication 4 selon lequel ladite pseudo-instruction visant un traitement prédéterminé d'au moins une première valeur prédéterminée vise l'initialisation ou l'affectation d'une variable locale dont la valeur est, après exécution de l'étape d'initialisation ou d'affectation, égale à ladite première valeur.

6. Procédé selon la revendication 4 ou la revendication 5 comprenant en outre une étape de définition (225) ou de calcul de ladite au moins une seconde valeur.

7. Procédé selon l'une quelconque des revendications 4 à 6, le procédé comprenant en outre une étape d'analyse (315, 320) d'au moins un ensemble de ladite pluralité de pseudo-instructions, lesdites étapes de suppression de ladite pseudo-instruction, visant un traitement prédéterminé d'au moins une première valeur prédéterminée, et d'ajout de ladite pseudo-instruction visant ledit traitement prédéterminé pour au moins une seconde valeur prédéterminée, étant effectuée en réponse à ladite étape d'analyse.

8. Procédé selon l'une quelconque des revendications précédentes, le procédé comprenant en outre une étape préalable de compilation (110) de code, le résultat de ladite étape de compilation comprenant ladite pluralité de pseudo-instructions.

9. Programme d'ordinateur comprenant des instructions adaptées à la mise en œuvre de chacune des étapes du procédé selon l'une quelconque des revendications précédentes lorsque ledit programme est exécuté sur un ordinateur.

10. Dispositif comprenant des moyens adaptés à la mise en œuvre de chacune des étapes du procédé selon l'une quelconque des revendications 1 à 8.

11. Carte à microcircuit comprenant des pseudo-instructions obtenues par le procédé selon l'une quelconque des revendications 1 à 8.

## Patentansprüche

1. Verfahren für Computer zur Sicherung des Programmierungszwischencodes für seine Ausführung durch eine virtuelle Maschine, wobei dieses Verfahren **dadurch gekennzeichnet ist, dass** es die folgenden Schritte umfasst:
- Empfangen (200) einer Vielzahl von Pseudoanweisungen des Programmierungszwischencodes;
- Umwandeln (230, 235) der Vielzahl von Pseudoanweisungen, wobei die Umwandlung einen Schritt des Hinzufügens von mindestens einer Pseudoanweisung, die eine Funktion zur Ausführungskontrolle von mindestens einer Pseudoanweisung von der Vielzahl von Pseudoanweisungen unabhängig von den Pseudoanweisungen des Ausgangssatzes betrifft; und
- Erzeugen von Pseudocode, wobei der erzeugte Pseudocode die umgewandelte Vielzahl von Pseudoanweisungen umfasst.

2. Verfahren nach Anspruch 1, wobei der Schritt des Hinzufügens einen Schritt des Hinzufügens einer Pseudoanweisung umfasst, die für einen Befehl für die virtuelle Maschine repräsentativ ist.

3. Verfahren nach Anspruch 2, wobei der Befehl für die virtuelle Maschine die Prüfung eines Ausführungsstapels der virtuellen Maschine zum Ziel hat, um zu prüfen, ob der Ausführungsstapel der virtuellen Maschine leer ist.

4. Verfahren nach Anspruch 1, wobei der Schritt der Umwandlung für jede von den empfangenen Pseudoanweisungen die folgenden Schritte umfasst:
- wenn die Pseudoanweisung auf eine vorbestimmte Verarbeitung von mindestens einem ersten vorbestimmten Wert abzielt, Entfernen der Pseudoanweisung und Hinzufügen (230) einer Pseudoanweisung, die auf die vorbestimmte Verarbeitung für mindestens einen zweiten vorbestimmten Wert abzielt, der sich von dem mindestens einen ersten vorbestimmten Wert unterscheidet; und,
- wenn die Pseudoanweisung auf den Vergleich des mindestens eines ersten Wertes mit einem anderen Wert abzielt, Entfernen der Pseudoanweisung und Hinzufügen (230) einer Pseudoanweisung, die auf einen Vergleich des mindestens eines zweiten Wertes mit dem anderen Wert abzielt.

5. Verfahren nach Anspruch 4, wobei die Pseudoanweisung, die auf eine vorbestimmte Verarbeitung von mindestens einem ersten vorbestimmten Wert abzielt, auf das Initialisieren oder das Zuweisen einer lokalen Variablen abzielt, deren Wert nach der Ausführung des Schritts des Initialisierens oder des Zuweisens gleich dem ersten Wert ist.

6. Verfahren nach Anspruch 4 oder Anspruch 5, das ferner einen Schritt des Definierens (225) oder des Berechnens des mindestens eines zweiten Wertes umfasst.

7. Verfahren nach einem der Ansprüche 4 bis 6, wobei das Verfahren ferner einen Schritt des Analysierens (315, 320) von mindestens einer Menge von der Vielzahl von Pseudoanweisungen umfasst, wobei die Schritte zum Entfernen der Pseudoanweisung, die auf eine vorbestimmte Verarbeitung von mindestens einem ersten vorbestimmten Wert abzielt, und des Hinzufügens der Pseudoanweisung, die auf die vorbestimmte Verarbeitung für mindestens einen zweiten vorbestimmten Wert abzielt, als Reaktion auf den Schritt des Analysierens durchgeführt werden.

8. Verfahren nach einem der vorhergehenden Ansprüche, wobei das Verfahren ferner einen vorherigen Schritt des Kompilierens (110) von Code umfasst, wobei das Ergebnis des Schritts des Kompilierens die Vielzahl von Pseudoanweisungen umfasst.

9. Computerprogrammprodukt, das Befehle umfasst, die für die Durchführung von jedem der Schritte des Verfahrens nach einem der vorhergehenden Ansprüche geeignet sind, wenn das Programm auf einem Computer ausgeführt wird.

10. Vorrichtung, die Mittel umfasst, die für die Durchführung von jedem der Schritte des Verfahrens nach einem der Ansprüche 1 bis 8 geeignet sind.

11. Chipkarte, die Pseudoanweisungen umfasst, die durch das Verfahren nach einem der Ansprüche 1 bis 8 erhalten wurden.

## Claims

1. A computer method for providing security for intermediate programming code for execution by a virtual machine, this method being **characterized in that** it comprises the following steps:
- receiving (200) a plurality of bytecode instructions of said intermediate programming code;
- converting (230, 235) said plurality of bytecode instructions, said conversion comprising a step of inserting at least one bytecode instruction relative to a function for execution checking of at least one bytecode instruction of said plurality of bytecode instructions, independently of the bytecode instructions of the initial set; and,
- generating bytecode, the generated bytecode comprising said plurality of converted bytecode instructions.

2. The method according to claim 1, wherein said inserting step comprises a step of inserting a bytecode instruction representing a command for said virtual machine.

3. The method according to claim 2, wherein said command for said virtual machine is directed to the verification of an execution stack of said virtual machine in order to check that said execution stack of said virtual machine is empty.

4. The method according to claim 1, wherein said converting step comprises, for each of said received bytecode instructions, the following steps:
- if said bytecode instruction is directed to predetermined processing of at least one first predetermined value, deleting said bytecode instruction and inserting (230) a bytecode instruction concerning said predetermined processing for at least one second predetermined value, distinct from said at least one first predetermined value; and,
- if said bytecode instruction is directed to the comparison of said at least one first value with another value, deleting said bytecode instruction and inserting (230) a bytecode instruction directed to comparing said at least one second value with said other value.

5. The method according to claim 4, wherein said bytecode instruction directed to predetermined processing of at least one first predetermined value is directed to the initialization or attribution of a local variable whose value is, after execution of the initializing or attributing step, equal to said first value.

6. The method according to claim 4 or claim 5, further comprising: a step of defining (225) or computing said at least one second value.

7. The method according to any one of claims 4 to 6, the method further comprising a step of analyzing (315, 320) at least one set of said plurality of bytecode instructions, said steps of deleting said bytecode instruction, directed to predetermined processing of at least one first predetermined value; and inserting said bytecode instruction directed to said predetermined processing for at least one second predetermined value, being attributed in response to said analyzing step.

8. The method according to any one of the preceding claims, the method further comprising a prior step of code compiling (110), the result of said compiling step comprising said plurality of bytecode instructions.

9. A computer program comprising instructions adapted to the implementation of each of the steps of the method according to any one of the preceding claims when said program is executed on a computer.

10. A device comprising means adapted to the implementation of each of the steps of the method according to any one of claims 1 to 8.

11. A microcircuit card comprising bytecode instructions obtained by the method according to any one of claims 1 to 8.
